# EUROPÄISCHE PATENTSCHRIFT

(11) **EP 0 717 855 B1**
(45) Veröffentlichungstag und Bekanntmachung des Hinweises auf die Patenterteilung: **17.11.1999**
(21) Anmeldenummer: 95925676.9
(22) Anmeldetag: 06.07.1995
(51) Int. Cl.: G01V 3/06

(54) **VERFAHREN UND SYSTEM ZUR ALTLASTENDETEKTION**
PROCESS AND SYSTEM FOR DETECTING HAZARDOUS ABANDONED OBJECTS
PROCEDE ET SYSTEME DE DETECTION D'OBJETS DANGEREUX ABANDONNES

(30) Priorität: 06.07.1994 DE 4423623
(43) Veröffentlichungstag der Anmeldung: 26.06.1996
(73) Patentinhaber: Institut Dr. Friedrich Förster Prüfgerätebau GmbH & Co. KG, 72766 Reutlingen (DE)
(72) Erfinder: ESCHNER, Wolfgang, D-88048 Friedrichshafen (DE); KOCH, Ralph, D-88046 Friedrichshafen (DE); KRAMER, Jürgen, D-88690 Uhldingen-Mühlhofen (DE); NEUMEYER, Bernhard, D-88090 Immenstaad (DE); ULBRICH, Rainer, D-88094 Oberteuringen (DE); TRINKAUS, Hanns-Peter, D-72766 Reutlingen (DE); AUSLÄNDER, Klaus, D-72766 Reutlingen (DE)
(74) Vertreter: Beier, Joachim, Dipl.-Ing.
(86) Internationale Anmeldenummer: DE9500858
(87) Internationale Veröffentlichungsnummer: WO9601436

(56) Entgegenhaltungen:
- EP-A- 0 249 110
- GB-A- 2 273 572
- US-A- 3 875 497
- US-A- 4 021 725
- US-A- 4 727 329

## Beschreibung

Die Erfindung betrifft ein Verfahren zur Detektion elektrisch leitender, insbesondere metallischer Gegenstände, in einem flächig ausgedehnten Suchbereich, insbesondere bei der Altlastendetektion, nach dem Oberbegriff von Anspruch 1 sowie ein System, insbesondere zur Durchführung des Verfahrens, nach dem Oberbegriff von Anspruch 10.

Der oberflächennahe Bereich des Erdbodens ist in vielen Bereichen der Welt infolge von Industrialisierung, militärisch geführter Auseinandersetzungen oder anderen den Erdboden belastenden Ereignissen zum Teil stark mit Fremdkörpern durchsetzt. So sind beispielsweise weltweit ganze Landstriche mit Landminen verseucht und damit praktisch nicht nutzbar. Zudem geht von diesen Minen eine permanente Gefahr für Leib und Leben tausender von Menschen aus. Weniger spektakulär, aber kaum weniger gefährlich ist die Verseuchung von militärischen Trainingsgeländen durch Splitter und Projektile jeglicher Art. Der Detektion und anschließenden Räumung solcher Altlasten kommt volkswirtschaftlich gesehen langfristig größte Bedeutung zu.

Zur Detektion elektrisch leitender, insbesondere metallischer Altlasten, die der unmittelbaren Wahrnehmung durch den Menschen entzogen sind, weil sie sich beispielsweise im Erdboden befinden oder von anderen Stoffen abweichender, insbesondere geringerer elektrischer Leitfähigkeit umgeben sind, werden vorwiegend induktive, nach dem Wirbelstromprinzip arbeitende Suchgeräte eingesetzt. Bei diesen Suchgeräten wird über eine mit Wechselspannung beaufschlagte Sendespule ein elektromagnetisches Wechselfeld erzeugt, das im Bereich seiner Reichweite in elektrisch leitenden Materialien Wirbelströme induziert, von denen wiederum elektromagnetische Wechselfelder ausgehen. In einer Empfängerspulenanordnung induzieren die elektromagnetischen Wechselfelder wiederum Wechselspannungen, die in charakteristischer Weise von der relativen Position zwischen Suchgerät und Suchobjekt und der Art des Suchobjektes abhängen. Die elektrischen Signale können in geeigneter Weise in für den Menschen wahrnehnbare Signale ungewandelt werden.

Bei einem bekannten Suchgerät dieser Art kann dieses von Hand über einen abzusuchenden Bereich in geringem Abstand insbesondere mit Schwenkbewegungen hinwegbewegt werden. Die Empfängerspulenanordnung weist, durch eine neutrale Trennebene getrennt, eine linke und eine rechte Hälfte auf, die jede für sich, wenn sie nahe dem Suchobjekt ist, einen unterschiedlichen akustischen Signalton erzeugt. Ein das Suchgerät schwenkender Bediener hört bei Schwenken etwa senkrecht zur Trennebene beispielsweise zuerst einen hohen Ton, wenn sich das Suchobjekt unterhalb der linken Sondenhälfte befindet, dann ein Abschwellen des Tones bis auf Lautstärke Null, wenn der gegenstand etwa symmetrisch zur Trennebene liegt, und dann ein Anschwellen eines tiefen Tones, der anzeigt, daß der Gegenstand vorwiegend unter der rechten Hälfte der Sonde liegt. Bei seitlichem Schwenken in eine Richtung kann die seitliche Position des Suchobjektes exakt festgelegt werden. Bei Schwenken des Suchgerätes über demselben Bereich in einer zur ersten Richtung beispielsweise senkrechten Richtung ist dann die genaue Punktlokalisierung des Suchobjektes möglich. Der Ort des Objektes kann mit einer Markierung versehen werden. Durch Abschreiten größerer Suchflächen zum Beispiel entlang vorher definierter Linien unter permanentem Schwenken des Suchgerätes durch den Bediener können große Flächen abgesucht und die Lage der Suchobjekte markiert werden. Das Verfahren erfordert gut ausgebildete "Sondengänger", die aufgrund von Ausbildung und Erfahrung aus dem Verlauf der Suchsignale Information über die Suchobjekte ableiten können. Die Suchergebnisse hängen stark von der Person des Sondengängers ab. Das Durchsuchen größerer Flächen ist sehr personal- und zeitintensiv.

Bekannt ist auch die Suche nach magnetisierbaren, insbesondere ferromagnetischen Materialien mittels Magnetfeldsonden. Magnetisierbare Materialien können vom Erdmagnetfeld magnetisiert werden und wirken dann wie schwache magnetische Dipole. Bei der Suche mit Magnetfeldsonden kann die Größe und Ausrichtung der Dipole festgestellt werden. Dabei liefert ein etwa parallel zur Oberfläche langgestreckter Gegenstand eine andere "Signatur" des Signalverlaufs als ein etwa punktförmiger oder ein senkrecht zur Oberfläche verlaufender langgestreckter Gegenstand, wobei bei dem ersten Fall die Magnetsonde das Feld beider Pole "sieht", in zweiten Fall nur einen Pol. Mit Magnetfeldsonden können größere Flächen kontinuierlich abgesucht werden, wobei vorzugsweise punktweise, also beispielsweise in 10 cm-Rastern, Meßwerte aufgezeichnet und die Punktinformation der einzelnen Rasterpunkte anschließend zu einem Gesamtbild der Suchobjekte im Suchbereich zusammengeführt werden kann. Durch die bipolare Wirkung der Suchobjekte ist insbesondere die Analyse bezüglich der Ausrichtung von Suchobjekten bei diesem Verfahren möglich. Es sind auch schon mehrere Magnetfeldsonden in einer "kammartigen" Anordnung eingesetzt worden, wobei mehrere nebeneinanderliegende Rasterpunkte gleichzeitig gemessen werden können. Wie beim Wirbelstromverfahren ist der Sucherfolg stark von persönlichen Faktoren der Bediener abhängig und sehr zeitaufwendig.

Aus der US-A-4,021,725 sowie der GB-A-22 73 572 ist jeweils ein Verfahren sowie ein System zur Detektion metallischer Objekte im Erdboden bekannt, wobei eine Suchsignale erzeugende Suchsonde im wesentlichen parallel über den Erdboden geführt wird. Durch Lokalisierungsmittel kann die Position der Suchsonde festgelegt werden.

Aus den Suchsignalen der Suchsonde sowie den Ausgangssignalen der Lokalisie-rungsmittel kann eine landkartenähnliche Abbildung der metallischen Objekte inner-halb des zu untersuchenden Geländes in einer Auswerteeinheit dargestellt werden. Zur Führung der Suchsonde über den Erdboden ist in der genannten US-A-4,021,725 eine erste Sonderführungseinrichtung in Form eines Landfahrzeugs vor-handen, an dem ein Hebel als zweite Sonderführungseinrichtung schwenkbar ange-ordnet ist. Für die Detektion wird das Landfahrzeug über das zu untersuchende Gelände gefahren, wobei der Hebel im wesentlichen rechtwinklig zu der Bewegung des Fahrzeugs zwischen zwei Wendepunkten hin- und herverschwenkt wird.

Aus der EP-A-0 249 110 sind Wirbelstromsonden zur Metalldetektion bekannt. Dabei sind innerhalb einer Sendespule mehrere, elektrisch gegeneinander geschaltete Empfangsspulen angeordnet. Die Empfängerspulen können zum Beispiel D-förmig ausgebildet und symmetrisch zueinander angeordnet sein, wobei die Symmetrieachse parallel zu den Rücken der D verläuft.

Aufgabe der Erfindung ist es, ein Verfahren sowie eine Vorrichtung zur Detektion von metallischen Gegenständen zu schaffen, mit dem große Flächen schnell und bei geringer Störanfälligkeit des verwendeten technischen Geräts abgesucht werden können.

Die Aufgabe wird gelöst durch ein Verfahren mit den Merkmalen des Anspruchs 1 sowie durch ein system, insbesondere zur Durchführung dieses Verfahrens, mit den Merkmalen des Anspruchs 10.

Bei dem erfindungsgemäßen Verfahren zur Detektion und vorzugsweise auch zur Identifikation elektrisch leitender, insbesondere metallischer Gegenstände in einem flächig ausgedehnten Suchbereich wird mindestens eine Suchsignale erzeugende Suchsonde relativ zum Suchbereich, vorzugsweise im wesentlichen parallel zu dessen Oberfläche, entlang einer in einer Suchfläche liegenden Suchbahn geführt. Dabei werden die Suchsignale durch mindestens eine mit der Suchsonde signalübertragend verbundene Auswerteeinheit automatisch den Positionen der Suchsonde auf der Suchfläche zugeordnet, wobei die Positionen durch insbesondere automatisch arbeitende Lokalisierungsmittel festgelegt werden können. Die den Suchflächen-Positionen zugeordneten Suchsignale können zu mindestens einer Abbildung der Gegenstände in Suchbereich umgewandelt werden.

Hierbei ist mit dem Begriff "Abbildung" nicht nur die Herstellung einer optisch wahrnehmbaren Aufzeichnung zu verstehen. Abbildung im Sinne der Erfindung kann auch durch Umwandlung der den Positionen zugeordneten Suchsignale in mittels mindestens eines Speichermediums speicherbare Signale und der Speicherung dieser Signale auf oder in ein Speichermedium erfolgen. Insbesondere kann die gesamte Suchinformation als Datensatz in einem magnetisch oder optisch arbeitenden Speichermedium (optischer Datenspeicher, Magnetband, Magnetplatte) abgebildet werden. Diese Abbildung kann simultan oder nachfolgend in andere Abbildungsformen umgewandelt werden, beispielsweise mittels Drucker oder dergleichen in kartenähnliche Abbildungen, als Aufzeichnung auf einem Bildschirm oder als Liste von Ortskoordinaten mit der zugehörigen kodifizierten Suchinfornation. Insbesondere kann neben der Ja/Nein-Angabe darüber, ob an einem Ort ein Suchsignal aufgetreten ist, durch geeignete Auswertemittel aus den Suchsignalen extrahierte Information über Form, Größe, Ausrichtung (Inklination, Deklination), Tiefe und Materialart ebenfalls abgebildet werden. Diese Angaben können zur Identifikation der Suchobjekte genutzt werden. Dies kann insbesondere einen auf die Art der gefundenen Suchobjekte abgestimmte Einsatz effizienter Räumungsmittel ermöglichen.

Es ist möglich, gekrümmte Suchflächen mit der Suchsonde abzufahren. Bevorzugt ist es, wenn die Suchfläche weitestgehend eben ist. Die Suchfläche kann von der Suchsonde in einem flächig zusammenhängenden Bereich abgefahren werden. Dies kann insbesondere lückenlos geschehen, so daß über jeden Ort der Suchfläche die Suchsonde mindestens einmal hinweggeführt wird. Suchbahnabschnitte können vorzugsweise zumindest abschnittsweise aneinander angrenzen und/oder einander zumindest teilweise überschneiden. Mit Vorteil kann jeder Ort der Suchfläche mehrfach überfahren werden. Dies kann die Detektionswahrscheinlichkeit erhöhen. Insbesondere kann jeder Ort mehrfach in verschiedenen Richtungen überfahren werden. Dies ist insbesondere bei Suchsonden mit richtungsabhängiger Empfindlichkeit, also beispielsweise bei Suchsonden mit mehreren Suchsektoren, die durch ggf. neutrale Trennebenen getrennt sind, von Vorteil. Selbst wenn ein Gegenstand bei Bewegung der Suchsonde mit der neutralen Trennebene entlang des Suchobjektes in einer Richtung kein Suchsignal erzeugt, so kann er in einer davon abweichenden Richtung ein Suchsignal erzeugen. Wenn für jeden Ort der Suchfläche Suchsignalfolgen für verschiedene Bewegungsrichtungen der Suchsonde aufgezeichnet werden, können zudem Suchsondensignale besser den Suchobjekten zugeordnet und insbesondere zur Information über deren Größe und laterale Ausrichtung erhalten werden.

Das Verfahren der Erfindung kann mit herkömmlichen "Sondengängern" umgesetzt werden, wobei die Suchsignale mit Positionssignalen zusammengeführt und zu Abbildungen der Gegenstände weiterverarbeitet werden können. Die Zuordnung zwischen Suchsignal und den verschiedenen Orten auf der Suchfläche, bzw. bei festgelegter relativer Position zwischen Suchbereich und Suchfläche, im Suchbereich, kann besonders einfach erfolgen, wenn die Führung der Suchsonde systematisch nach einem insbesondere reproduzierbaren Schema verläuft.

Es kann eine Flächenrasterungsbewegung der Suchsonde erzeugt werden. Benachbarte Suchbahnabschnitte können im wesentlichen parallel zueinander verlaufen und vorzugsweise zumindest aneinander grenzen, sich abschnittsweise auch überlagern. Die Suchbahn kann dann insbesondere mäanderförmig mit geraden Suchbahnabschnitten verlaufen. Auch eine zickzack-förmige Gesamtbewegung ist möglich. Bewegungsgeschwindigkeiten der Suchsonde entlang der Suchbahn können im Bereich einiger m/s liegen, vorzugsweise bei ca. 1 bis 2 m/s.

Die Suchsonde wird erfindungsgemäß entlang einer Suchbahn geführt, die sich aus einer linearen, vorzugsweise zumindest abschnittsweise geradlinigen ersten Bewegung und einer dieser überlagerten zweiten Bewegung ergibt, die kreisförmig ist. Die zweite Bewegung ist hier eine technisch besonders einfach und robust realisierbare Drehbewegung. Bei dieser vollständigen Drehung, also kreisförmigen zweiten Bewegung, spricht man auch vom "Rasenmäher-Prinzip".

Mit einer oder mehreren nach dem Rasenmäher-Prinzip geführten Suchsonde können entlang der ersten linearen Bewegung Bahnen von etwa der Breite des Durchmessers der Kreisbewegung abgesucht werden, wobei bei entsprechender Abstimmung zwischen der Geschwindigkeit der ersten Bewegung und der Drehgeschwindigkeit der zweiten Bewegung mit Ausnahme der linken und rechten Randbereiche der Gesamtsuchbahn alle Suchorte mehrfach in verschiedenen Richtungen von der Suchsonde überfahren werden, überwiegend auch mit unterschiedlicher Orientierung der Suchsonde, also mit unterschiedlicher Ausrichtung ggf. existierender Bereiche minimaler Empfindlichkeit (Trennebene) der Suchsonde.

Mit Vorteil kann als Suchsonde eine Wirbelstromsonde vorgesehen sein, die vorzugsweise mit mehreren, insbesondere mit zwei verschiedenen Frequenzen des Erregerfeldes betrieben werden kann. Die Suchsonde kann punktförmig wirken, mit Vorteil kann sie eine flächenhafte Wirbelstromsonde mit über eine Sondenfläche insbesondere sektoriell variierender Signalauswertung sein. Dabei kann die Wirbelstromsonde vorzugsweise zwei insbesondere symmetrisch zueinander angeordnete, durch eine neutrale Trennebene getrennte Sondensektoren aufweisen, die der Suchsonde eine Pseudo-DipolCharakteristik verleihen. Eine sektoriell variierende Signalauswertun erlaubt zumindest eine liniengenaue, bei mehr als zwei Sektoren ggf. auch eine punktgenaue Positionsbestimmung der Suchsonde relativ zum Suchobjekt bzw. eine entsprechende Bestimmung der Position des Suchobjekts relativ zur Suchsonde.

Der Einsatz mehrerer Erregerfrequenzen bei der Wirbelstromsonde erlaubt eine Reihe von Vorteilen, die sich daraus ergeben, daß verschiedene Materialien sich in Abhängigkeit ihrer Materialeigenschaften, wie elektrischer Leitfähigkeit, Permeabilität etc., in charakteristischer Weise auf die Impedanz der Empfängerspulen der Wirbelstromsonde auswirken. Die Empfängerspulenimpedanz, typischerweise darstellbar als Vektor in einem sogenannten Impedanz-Diagramm, das in einer komplexen Impedanzebene den realen ohmschen Widerstand und den imaginären, induktiven Blindwiderstand wiedergibt, ändert sich für jedes Material in charakteristischer Weise mit der Frequenz. Betrachtet man beispielsweise zwei Frequenzen - bevorzugt werden 2 kHz und 20 kHz -, so können jedem Material zwei den Frequenzen entsprechende Vektoren in der Impedanzebene zugeordnet werden. Diese Vektoren können bezüglich ihres Realteils und/oder Imaginärteils betrachtet und zur Informationsgewinnung genutzt werden. So ist beispielsweise der Blindwiderstand (Imaginärteil) bei magnetischem Boden und bei Salzwasser oder mit Salzwasser getränktem Boden im wesentlichen frequenzunabhängig. Dies kann ausgenutzt werden, um beispielsweise ein Hintergrundsignal, das auf eine dieser Substanzen zurückgeht, zu diskriminieren. Die realen und imaginären Anteile können beispielsweise in entsprechende Spannungen umgewandelt und zur Darszellung mittels Oszillographen oder dergleichen verwendet werden.

Im Gegensatz zu magnetischem Boden und Salzwasser führen Metalle bei verschiedenen Frequenzen zu unterschiedlichen Beiträgen zum Blindwiderstand. Wird also beispielsweise nur die Differenz der Blindwiderstände bei zwei verschiedenen Erregerfrequenzen ausgewertet, so wird dadurch automatisch die Hintergrundinformation eliminiert und es bleibt nur die Information über die gesuchten Materialien übrig. Diese liegt als Absolutwert der Differenz der induktiven Blindwiderstände (Delta-µ) vor, wobei die Lage von Delta-µ auf der Achse des induktiven Blindwiderstandes ebenfalls materialabhängig ist. Durch Auswertung von "Fenstern", d.h. Wertebereichen auf der imaginären Achse kann durch dieses Delta-µ-Verfahren erreicht werden, daß beispielsweise Untergrund unterdrückt wird und/ oder die Suchobjekte nach ihrer Materialart (beispielsweise Aluminium, rostfreier Stahl, Eisen) identifiziert werden. Fenster können selbstverständlich auch bezüglich des ohmschen Widerstandes gesetzt und zur Auswertung herangezogen werden.

Auch Impulsbetrieb ist möglich, wobei ein beispielsweise rechteckiger Erregerimpuls einer Vielzahl von Frequenzen entspricht, auf die verschiedene Materialien unterschiedlich "antworten". So kann beispielsweise der Frequenzgehalt kurzer Impulse zur Diskriminierung zwischen schlecht leitendem Material (nasser Boden, beispielsweise in Strandnähe, Salzwasser) und elektrisch gut leitendem Material (Metall) benutzt werden.

Mit Vorteil kann die Suchsonde auch eine Magnetfeldsonde sein, durch die Veränderungen des Erdmagnetfeldes detektierbar sind, die durch Einwirkung des Erdmagnetfeldes auf magne-tisierbare, insbesondere ferromagnetische Gegenstände verursacht werden. Derartige Magnetfeldsonden sind an sich bekannt. Sie arbeiten als passive Sonden, die das Erdmagnetfeld als auf die Suchobjekte einwirkende Energiequelle nutzen, wie in der Einleitung beschrieben. Durch Wirkung der Suchobjekte als magnetische Dipole sind mit diesen Suchsonden auch Informationen über Form und Ausrichtung von Gegenständen erhältlich. Tiefer gelegene Gegenstände können bei der Suche in einem lateral weiter ausgedehnten Bereich der Oberfläche andere detektierbare Verzerrungen des Erdmagnetfeldes verursachen als gleichartige Gegenstände, die nahe der Oberfläche liegen. So können über die "Schärfe der Konturen" eines durch eine Magnetfeldsonde detektierten Gegenstandes auch Abschätzungen über die Tiefe des Gegenstandes bezüglich der Oberfläche des Suchbereiches möglich sein. Für Magnetfeldsonden existieren bereits Auswerteeinrichtungen, die aus den Suchsignalen mit Dipolcharakter eine lagerichtige und bezüglich Objektausdehnung und Ausrichtung und ggf. Tiefe, das Suchobjekt charakterisierende Darstellung ermöglichen.

Die Tiefenreichweite von Magnetfeldsonden kann typischerweise bis zu ca. 6 m betragen. Die mit Wirbelstromsonden erhältlichen Suchsignale stammen dagegen im wesentlichen aus einem oberflächennahen Bereich, der typischerweise bis in eine Tiefe von ca. 75 cm reichen kann. Die optimale Wirkung kann bei wenigen 10 cm, insbesondere etwa bei 30 cm Tiefe liegen. Typische Verlegetiefen von Minen liegen in diesem "flachen" Bereich. Magnetfeldsonden sprechen auf magnetisierbare Suchobjekte an, insbesondere auf Ferromagnetika, während für die Detektierbarkeit mit der Wirbelstromtechnik elektrische Leitfähigkeit Voraussetzung ist. Mit Vorteil können mindestens eine Wirbelstromsonde und mindestens eine Magnetfeldsonde vorzugsweise gleichzeitig entlang der Suchfläche geführt werden. Dies erlaubt es, den Informationsgehalt beider Verfahren, die sich in vorteilhafter Weise ergänzen, zu kombinieren. Insbesondere kann eine Durchsuchung sowohl oberflächennaher, sogenannter "flacher" Bereiche, als auch tiefer gelegener Bereiche in einem einzigen Suchdurchgang ermöglicht werden.

Zweckmäßig ist es, die Suchsignale der Wirbelstromsonde und die der Magnetfeldsonde zu einer gemeinsamen Abbildung zu kombinieren. Dabei kann ausgenutzt werden, daß sich die über beide verschiedenen Verfahren erhältlichen Suchinformationen in zweckmäßiger Weise ergänzen, so daß sowohl magnetisierbare, als auch nicht magnetisierbare, aber elektrisch leitende Gegenstände detektiert und ggf. charakterisiert werden können. Es können mit Vorteil für Magnetfeldsonden optimierte Auswerteeinrichtungen eingesetzt werden, die eine Auswertung und Darstellung bipolarer Ereignisse erlauben. Bei der Verwendung von Wirbelstromsonden, die durch ihre Ausbildung ebenfalls Pseudo-Dipol-Signale erzeugen, können diese ebenfalls mit den an sich bekannten und optimierten Auswerteeinrichtungen für eine Magnetfeldsonde kombiniert werden. Während beim Suchvorgang mit einer Magnetfeldsonde das Suchobjekt selbst als Dipol wirkt, ist es bei der Wirbelstromsonde mit Pseudo-Dipol-Charakteristik so, daß das Suchobjekt selbst als quasi punktförmige Quelle eines elektromagnetischen Wechselfeldes anzusehen ist, wobei der Dipolcharakter des Suchsignals durch die besondere Ausbildung der flächigen Suchsonde mit zwei Suchsektoren erzeugt wird. Der Vorteil besteht unter anderem darin, daß nach dem Verfahren der Erfindung für beide Verfahren eine im Grunde bekannte und bewährte Auswetungs-Hard- und -Software für Magnetfeldsonden einsetzbar ist. Dies fördert auch die Möglichkeit, die Ergebnisse beider Verfahren in einer gemeinsamen Abbildung zu kombinieren.

Als Lokalisierungsmittel, d.h. als Mittel zur Feststellung der Position der Suchsonde relativ zur Suchfläche bzw. zum Suchbereich, sind verschiedene bekannte, insbesondere auch mehrere miteinander kombinierbare Mittel möglich. Dies können optische und/oder mechanische und/oder elektromechanische und/oder elektromagnetische Mittel sein. So kann beispielsweise die Position der Suchsonde relativ zu einem willkürlich festlegbaren Bezugspunkt im Suchbereich mittels Laserstrahlen festgestellt werden (Laser tracking). Denkbar ist auch, die Suchsonde als Quelle eines elektromagnetischen Wechselfeldes auszubilden, die von einem entsprechenden Empfängergerät geortet wird. Die Lokalisierungsmittel können auch mindestens einen satellitengestützt arbeitenden Positionsgeber aufweisen. Lokalisierungsmittel können auch zur Positionsbestimmung eines Geräts verwendet qwerden, an dem die Suchsonde starr, insbesondere aber beweglich und in seiner Relativposition zum Gerät durch weitere Lokalisierungsmittel bestimmbar angeordnet ist. Diese können insbesondere Richtungs-, Weg- und Winkelmesser umfassen.

Durch Zusammenführung der Information der Suchsonden (Suchsignale) und der Lokalisierungsmittel (Positionssignale) kann eine Zuordnung von Suchsignal und Position im Suchbereich erfolgen. Die Information kann in speicherbare Form umgewandelt, zusammengeführt und gespeichert werden, wozu an sich bekannte Rechner- und Speichereinheiten einsetzbar sind. Sie kann auch, entweder im wesentlichen zeitgleich mit der Detektion, aber auch zeitlich versetzt zum eigentlichen Detektionsvorgang aufgrund der gespeicherten Daten zu Abbildungen der Gegenstände im Suchbereich umgewandelt werden. Mit Vorteil kann die Abbildung der Gegenstände, ggf. nach Speicherung, auf einem temporären und/oder permanenten flächigen Aufzeichnungsträger erfolgen, der eine der Suchfläche entsprechende Suchfläche aufweist, wobei vorzugsweise ein Gegenstand durch ein vorzugsweise farbiges Gegenstandssymbol dargestellt wird, aus dem die Position des Gegenstandes im Suchbereich und ggf. dessen Größe, Orientierung, Material bzw. Materialart und Tiefe erkennbar ist.

Der Aufzeichnungsträger kann dabei beispielsweise ein Bildschirm sein. Die Aufzeichnung kann auch mittels Druckereinheiten auf karzenähnliche Aufzeichnungsträger aufgezeichnet werden. Selbstverständlich ist es möglich, die nach dem Verfahren aufzeichenbare Information unter verschiedenen Aspekten zu analysieren. Dazu kann, ausgehend von einem gespeicherten Datensatz, mittels Auswerte-Hardware und -Software die Information aufbereitet werden. Bevorzugt ist ein Verfahren, bei dem zusammengehörende Pseudo-Dipol-Abbildungen durch rechnerische Behandlung zu einem einzigen graphischen Symbol zusammengefaßt und auf dem Aufzeichnungsträger, der auch als Objektkarte bezeichnet werden kann, aufgezeichnet werden. Wenn beispielsweise ein Pseudo-Dipol zum Beispiel durch das Ziffernsymbol einer "8" dargestellt wird, so können sich daraus wichtige Informationen ablesen lassen, die sowohl die Abzastmethode, als auch das detektierte Suchobjekt beschreiben. Zunächst kann das Symbol "8" die Präsenz eines metallischen Suchobjektes anzeigen. Die graphische Größe der "8" kann die Suchobjektausdehnung charakterisieren. Die Orientierung der "8" kann bei Suchsonden mit Pseudo-Dipol-Charakteristik die generelle Abtastrichtung anzeigen, die senkrecht zur Trennebene zwischen zwei Sondensektoren verlaufen kann. Die Orientierung der "8" kann auch entsprechend erkennbarer Richtungsstrukturen im Dipol-Abbild entsprechend der eigentlichen Objektorientierung gedreht werden.

Derart gestaltete "Objektkarten" können alle von der Sonde erfaßten Metallobjekte anzeigen. Wird beispielsweise die für die Wirbelstromsonde beschriebene materialselektive Technik der "Fenster" auf imaginären und/oder realen Wertebereichen angewendet, so kann beispielsweise durch besondere Farbgebung der "8"-Symbole das Vorliegen bestimmter Metallarten oder Metallgruppen angezeigt werden. So könnten beispielsweise alle detektierten Messingobjekte in gelber Farbe dargestellt werden, alle Stahlobjekte blau und so weiter. Dies kann beispielsweise dann zweckmäßig sein, wenn in einem mit Stahlsplittern durchsetzten Suchbereich gefährliche Munitionsteile mit Messinghülsen gesucht werden sollen. Die Möglichkeit, die gesamten erfaßten suchdaten hinsichtlich verschiedener Aspekte zu analysieren, erlaubt es, die ggf. nacgfolgende Räumung der detektierten Gegenstände der Art der gefundenen Gegenstände optimal anzupassen. Dies erhöht neben der durch das erfindungsgemäße Verfahren gegenüber herkömmlichen Verfahren enorm gesteigerten Flächenleistung des abbildenden Detektionsverfahrens noch einmal die Wirtschaftlichkeit und erlaubt, Mensch und Material zielgerichtet und auf die jeweilige Aufgabe optimal abgestimmt effektiv einzusetzen.

Ein insbesondere zur Durchführung des beschriebenen Verfahrens geeignetes System zur Detektion und ggf. Identifikation insbesondere metallischer Gegenstände in einen flächig ausgedehnten Suchbereich kann mindestens eine Suchsignale erzeugende, relativ zum Suchbereich, vorzugsweise im wesentlichen parallel zu seiner Oberfläche entlang einer in einer Suchfläche liegenden Suchbahn führbare Suchsonde aufweisen, die an mindestens einem Sondenführungsmittel angeordnet ist. Weiterhin können Lokalisierungsmittel zur Festlegung der Position der Suchsonde in der Suchfläche und mindestens eine mit der Suchsonde signalübertragend verbundende Auswerteeinheit sowie Abbildungsmittel zur Erzeugung mindestens einer Abbildung der Gegenstände im Suchbereich vorgesehen sein.

Die Sondenführungsmittel weisen eine im wesentlichen parallel zur Suchfläche in einer ersten Bewegungsrichtung bewegbare, insbesondere steuerbare erste Sondenführungseinrichtung auf. Insbesondere für die Suche im oberflächennahen Bereich des Erdbodens ist es vorteilhaft, wenn die erste Sondenführungseinrichtung ein steuerbares Fahrzeug, insbesondere ein Landfanrzeug ist, welches vorzugsweise auch fernsteuerbar sein kann. Die Suchsonde kann an dem Fahrzeug direkt angebracht sein, genauso kann das Fahrzeug aber ein fahrbares Gerät, etwa einen Hänger mit der Suchsonde oder mehreren Suchsonden ziehen oder vor sich herschieben. Fahrzeuge können auch einem vorprogrammierten Fahrprogramm folgen, nachdem eine vorbestimmte Fläche nach festgelegtem Muster abgesucht wird. Das Fahrzeug muß nicht bemannt sein, was insbesondere bei potentiell gefährlichen Suchbereichen, wie Minenfeldern, zweckmäßig ist.

Erfindungsgemäß ist an der ersten Sondenführungseinrichtung mindestens eine zweite Sondenführungseinrichtung angeordnet, die um eine im wesentlichen senkrecht zur Suchfläche ausgerichtete Achse drehbar ist und die mindestens eine Suchsonde aufweist. Mit dieser Ausführungsform, mit der das oben beschriebene "RasenmäherPrinzip" realisierbar ist, kann die Suchsonde bzw. mehrere Suchsonden an einem starren Rotationselement, etwa einem beispielsweise armartigen Träger oder einer Scheibe, im Abstand zu einer im wesentlichen senkrecht zur Bodenfläche des Fahrzeuges ausgerichteten Achse angeordnet sein. Ein Motor, insbesondere ein bezüglich seiner Drehgeschwindigkeit leicht steuerbarer Elektromotor, kann, ggf. über Getriebe, das Rotationselement drehen. Beispielsweise im Bereich der Lagerung des Rotationselementes können Winkelgeber vorgesehen sein, die die Drehstellung des Rotationselementes registrieren und an eine Auswerteeinheit weiterleiten können. Die Winkelgeber sind Teil der Lokalisierungsmittel für die Suchsonde. Aus dem radialen Abstand zwischen Suchsonde und Drehachse und der Drehstellung ist die Position der Suchsonde bezüglich der Drehachse in Polarkoordinaten festlegbar. Die Position der Drehachse, ggf. aber auch die Position eines anderen mit der Drehachse starr verbundenen Ortes an der ersten Sondenführungseinrichtung, kann durch weitere Lokalisierungsmittel wie oben beschrieben festgelegt werden. Damit ist die Position der Suchsonde bezüglich der Suchfläche bzw. des Suchbereiches jederzeit festlegbar. Diese Information kann den Auswertemitteln zugeleitet werden.

Zur Übertragung der Suchsignale von einer rotierenden Suchsonde zu den Auswertemitteln können beispielsweise Schleifkontakte oder dergleichen vorzugsweise im Bereich der Lagerung des Rotationselementes vorgesehen sein. Für die elektrische Kontaktierung und Weiterleitung der Suchsignale der Wirbelstromsonde können insbesondere berührungslos arbeitende Rotierübertrager vorgesehen sein, bei denen die Übertragung von Wechselspannung über einen Luftspalt hinweg zwischen koaxial zueinander angeordneten Ferritkern-Elektromagneten erfolgt. Diese sind optimal an die Übertragung insbesondere hochfrequenter Wechselspannungen angepaßt und arbeiten verschleißfrei.

Es kann eine insbesondere flächenhafte Wirbelstromsonde mit über die Sondenfläche insbesondere sektoriell variierender Signalauswertung vorgesehen sein. Diese kann mindestens zwei vorzugsweise symmetrisch zueinander angeordnete Sondensektoren aufweisen. Zwei Sondensektoren können der Wirbelstromsonde eine Pseudo-Dipolcharakteristik verleihen, wie oben beschrieben. Mehrere Paare von Sondensektoren können kombiniert werden.

Mit Vorteil kann die oben erwähnte Wirbelstromsonde mindestens eine Sendespule zur Erzeugung eines veränderlichen Magnetfeldes und mindestens eine im Bereich des Magnetfeldes angeordnete, eine Vielzahl von Windungen aufweisende Empfängerspulenanordnung aufweisen, wobei die Windungen mindestens ein Spulenpaar bilden, das eine Vielzahl hintereinander geschalteter Paare von in Differenz zueinander geschalteten und bezüglich der durch das Magnetfeld der Sendespule in ihnen induzierten Spannungen gleichen einzelnen Leiterschleifen aufweist. Die Sendespule kann aus Draht gewickelt sein, der insbesondere für Stromstärken in der Größenordnung von 1 A problemlos, d.h. im wesentlichen ohne Erwärmung einsetzbar ist.

Die Anordnung einer zur Erzeugung eines starken Magnetfeldes geeigneten Sendespule, die insbesondere auch im Impulsbetrieb, vorzugsweise auch im Zwei-Frequenz-Betrieb betreibbar ist, mit einer Empfängerspulenanordnung der obengenannten Art ist in idealer Weise an die Suchaufgabe angepaßt. So induziert zwar das veränderliche Magnetfeld der Sendespule in jeder einzelnen Leiterschleife Spannungen, durch die Differenzschaltung jeweils zweier bezüglich der durch das Magnetfeld in ihnen induzierten Spannungen gleichen einzelnen Leiterschleifen ist aber jedes Paar von Leiterschleifen, solange ausschließlich das Magnetfeld der Sendespule in ihnen wirkt, spannungsfrei. Eine Differenzschaltung gleichsinnig gewickelter einzelner Leiterschleifen ist dabei äquivalent zu einer Reihenschaltung gegensinnig gewickelter einzelner Leiterschleifen. Durch die Differenzschaltung einzelner Leiterschleifen kann ein Aufbau hoher induzierter Spannungen in der Empfängerspulenanordnung selbst bei starkem und/oder hochfrequentem und mehrfach-frequentem Magnetfeld der Sendespule weitgehend vermieden werden. Niedrige induzierte Potentiale führen zu keinen oder minimalen kapazitiven Streuströmen, die durch schwer kontrollierbaren Abbau der Potentiale den Störpegel erhöhen und die Empfindlichkeit damit herabsetzen würden. Wie oben erwähnt, sind starke Magnetfelder der Sendespule erwünscht, um selbst in kleinen und/oder schlecht elektrisch leitenden und/oder von dem Suchgerät weiter entfernten Suchobjekten noch Wirbelströme mit detektierbaren Auswirkungen auf die Empfängerspulenanordnung zu induzieren. Hohe Frequenzen können u.a. wegen der zur Frequenz proportionalen Größe der induzierten Spannungen erwünscht sein, die wiederum die Stärke der induzierten Ströme bestimmen. Insbesondere auch für den Mehrfrequenzbetrieb sind diese Empfangsspulenanordnungen mit einem konstruktiv bedingten niedrigen Potentialniveau vorteilhaft.

Jedes Spulenpaar der Empfangsspulenanordnung kann vom Magnetfeld der Sendespule mechanisch voll entkoppelt sein, was bedeutet, daß das Magnetfeld der Sendespule in den Spulenpaar keine Gesamtspannung induziert. Es können auch mehrere solcher mechanisch entkoppelter Spulenpaare vorgesehen sein, die gegeneinander versetzt und/oder verdreht angeordnet sind. Durch die Versetzung und/oder Verdrehung der Spulenpaare wird es möglich, die Wirbelstromsonde beispielsweise als lateral ausgedehntes Feld vieler Spulenpaare aufzubauen. Lateral großflächig ausgedehnte Suchspulenanordnungen erlauben es, pro Zeiteinheit größere Suchbereiche abzusuchen als Suchsonden mit Einfach-Spulenpaaren. Werden Spulenpaare außerdem gegeneinander verdreht, so können die Vorzugsrichtungen größter bzw. minimaler Empfindlichkeit (die Trennebenen) der einzelnen Spulenpaare in geeigneter Weise kombiniert werden. Es kann so über ein bestimmtes Suchobjekt von verschiedenen Spulenpaaren gleichzeitig Information aufgenommen und zur Verarbeitung weitergeleitet werden. Aus der Korrelation der Suchsignale mehrerer Spulenpaare über ein Suchobjekt kann die Lokalisierbarkeit für Suchobjekte erhöht werden. Außerdem kann die Identifizierbarkeit eines Suchobjektes, zum Beispiel nach Größe, Orientierung und Form, verbessert werden.

Die Spulenpaare können sich sowohl in ihren Dimensionen als auch in der Zahl der Paare einzelner Leiterschleifen, deren Form und/oder der Art und Weise ihrer Zusammenschaltung voneinander unterscheiden. Mit Vorteil sind die Spulenpaare der Empfängerspulenanordnung identisch aufgebaut, was insbesondere aus Gründen der wirtschaftlichen Fertigung und der Qualitätkonstanz gewünscht sein kann. Zweckmäßig ist es, wenn die einzelnen Leiterschleifen eines Paares im wesentlichen gleiche Flächen umfassen und spiegelsymmetrisch zu einer Spulenpaar-Spiegelebene, die der neutralen Trennebene entspricht, angeordnet sind und mit dieser in einer Spiegelebene des Magnetfeldes der Sendespule angeordnet sind. Vorzugsweise kann ein Spulenpaar eine zu einer flächentrennenden Trennebene (Spulenpaar-Spiegelebene) symmetrische Form aufweisen, insbesondere die Form eines Doppel-D mit der Trennebene parallel zu den Rücken der D. Da es für die mechanische Entkopplung zwischen Magnetfeld der Sendespule und dem Spulenpaar ausreichend ist, wenn der durch die einzelnen, zu Paaren zusammengeschalteten Leiterschleifen hindurchgehende magnetische Fluß jeweils im wesentlichen gleich ist, kann es ausreichen, wenn die Forderung nach Spiegelsymmetrie des Magnetfeldes im wesentlichen im Bereich der Paare von Leiterschleifen bzw. der Spulenpaare erfüllt ist.

Es ist denkbar, die einzelnen Leiterschleifen der Empfängerspulenanordnung als Drahtwicklungen auszubilden. Mit Vorteil ist die Empfängerspulenanordnung in der Technik der gedruckten Schaltungen aufgebaut und weist mindestens eine Trägerschicht aus elektrisch isolierendem Material auf, auf die Windungen in Form von Leiterbändern von nebeneinander angeordneten Leiterbahnen aus elektrisch leitendem Material, insbesondere Metall, aufgebracht sind. Die Trägerschicht kann ein- und mehrseitig beschichtet sein, es können Durchkontaktierungen für den Wechsel der Trägerschicht-Seite vorgesehen sein und es können für die räumlich konzentrierte Packung möglichst vieler Leiterbahnen mehrere Leiterbahnen aufweisende Trägerschichten, durch geeignete Isolierung getrennt, übereinander angeordnet sein (Multilayer-Technik) . Die Wirbelstromsonde kann auch mindestens eine Abschirmung gegen elektrische Felder aufweisen, die vorzugsweise ebenfalls in der Technik der gedruckten Schaltungen ausgebildet sein kann.

Mit Vorteil kann mindestens eine zusätzliche Empfängerspule in einen Abstand oberhalb und/oder unterhalb der Empfängerspulenanordnung angeordnet sein. Vorzugsweise kann ein Spulenpaar vorgesehen sein, das in einem Abstand oberhalb und/oder unterhalb der Empfängerspulenanordnung angeordnet ist, vorzugsweise oberhalb und/oder unterhalb eines identisch ausgerichteten, vorzugsweise identischen Spulenpaares. Ein solches Spulenpaar, das ebenfalls mit Vorteil mechanisch entkoppelt sein kann, kann zur Erzeugung von Signalen genutzt werden, die eine Information über den Abstand zwischen Empfängerspulenanordnung und Suchobjekt gestatten. Hierbei nutzt man aus, daß sowohl die Stärke des Magnetfeldes der Sendespule als auch das Magnetfeld der induzierten Wirbelströme im Suchobjekt stark abstandsabhängig sind, etwa proportional zur dritten Potenz des Abstandes. Der Unterschied der Signalstärke zwischen einem Spulenpaar in der Fläche der Empfängerspulenanordnung und einem identischen, darunter oder darüber, d.h. näher oder weiter entfernt vom Suchobjekt angeordneten Spulenpaar, erlaubt damit eine Abschätzung der Tiefenlage eines Suchobjektes. Durch Auswertung von Abstandssignalen können auch bestimmte Tiefenlagen diskriminiert werden. So können beispielsweise Kleinteile (z.B. Splitter), die auf der Bodenoberfläche liegen, anhand charakteristischer Abstandssignale erkannt und ggf. diskriminiert werden.

Das System kann auch Nivellierungsmittel aufweisen, mit Hilfe derer der Abstand zwischen der auf der Suchfläche bewegten Suchsonde und der Oberfläche des Suchbereiches, insbesondere der Erdoberfläche, im wesentlichen konstant gehalten wird. Dies kann insbesondere bei schwierigem Gelände von Vorteil sein. Eine an einer ersten Sondenführungseinrichtung, insbesondere einem Fahrzeug, angeordnete zweite Sondenführungseinrichtung kann dazu vertikal verschiebbar und/oder kippbar ausgebildet sein. Es können Abstandshalter vorgesehen sein, die den Abstand zwischen Suchsonde bzw. Suchfläche und der Oberfläche des Suchbereiches etwa konstant halten. Dies können mechanische Abstandshalter sein, beispielsweise Stützräder oder dergleichen. Es können auch Berührungssensoren vorgesehen sein, die an eine Steuerung der Nivellierungsmittel Abstandssignale weiterleiten. Eine möglichst weitgehende Konstanz zwischen Suchfläche und der Oberfläche des Suchbereiches kann wünschenswert sein, um insbesondere die Tiefenortung der Suchobjekte zu verbessern und sicherer zu machen.

Bei einer bevorzugten Ausführungsform der Wirbelstromsonde ist nur eine Sendespule vorgesehen, die eine Sendespulen-Spiegelebene aufweist. Die Spulenpaare sind gegeneinander versetzt mit den Spulenpaar-Spiegelebenen (Trennebenen) in der Sendespulen-Spiegelebene angeordnet. Die Sendespule kann beispielsweise in Form eines insbesondere langgestreckten Rechteckes, ggf. mit abgerundeten Ecken, ausgebildet sein. Die Spulenpaare können in Längsrichtung aufeinander folgend angeordnet sein, vorzugsweise direkt aufeinander folgend. Eine derart aufgebaute langgestreckte Wirbelstromsondenanordnung kann bei Bewegung quer zu seiner Längsachse, insbesondere etwa senkrecht zu dieser, breite Bahnen im wesentlichen lückenlos absuchen.

Bei einer anderen Ausführungsform der Erfindung ist ebenfalls nur eine Sendespule vorgesehen, die mehrere, eine zentrale Sendespulenachse enthaltende Sendespulen-Spiegelebenen aufweist. Die Spulenpaare sind gegeneinander versetzt und/oder verdreht mit den Spulenpaar-Spiegelebenen in den Sendespulen-Spiegelebenen angeordnet. Denkbar sind hier beispielsweise quadratische Sendespulen, bei denen jeweils entlang der Diagonalen und der Seitenhalbierenden Spiegelebenen verlaufen. Spulenpaare, die symmetrisch zu diesen Sendespulen-Spiegelebenen angeordnet sind, weisen gegeneinander Verdrehungswinkel auf, die einem Vielfachen von 45° entsprechen. Am Ort der zentralen Sendespulenachse können auch mehrere Spulenpaare um eine gemeinsame, mit der zentralen Sendespulenachse zusammenfallende Achse gegeneinander verdreht sein. Die Sendespule kann auch als anderes geradzahliges Vieleck, also beispielsweise als Sechseck, Achteck, Zwölfeck etc., ausgebildet sein, wobei sich jeweils die entsprechenden Verdrehungswinkel der Spulenpaare zueinander aus den Winkeln zwischen den Symmetrieebenen der Sendespule ergeben.

Mit Vorteil kann die Sendespule kreisrund sein und damit eine unendliche Zahl von Spiegelebenen aufweisen. Spulenpaare, die mit ihrer Spulenpaar-Spiegelebene in radialer Richtung einer kreisrunden Sendespule angeordnet sind, sind ebenfalls mechanisch entkoppelt. Bei einer kreisrunden Sendespule mit rotationssymmetrischem Magnetfeld sind somit beliebige Verdrehungswinkel zwischen den Spulenpaar-Spiegelebenen möglich. Jeweils bezüglich der Drehung gleich ausgerichtete Spulenpaare können auch in radialer Richtung gegeneinander versetzt sein.

Eine bevorzugte Ausführungsform der Erfindung weist eine kreisrunde Sendespule und um die Spulenachse gegeneinander verdrehte Spulenpaare auf. Die Spulenpaare können, insbesondere wenn Sendespule und Empfängerspulenanordnung nicht koplanar angeordnet sind, über den Bereich der Sendespule hinausragen. Mit Vorteil umfaßt die Sendespule die gegeneinander verdrehten Spulenpaare, und die Spulenpaare und die Sendespule sind koplanar angeordnet. Es können beispielsweise vier Spulenpaare um jeweils 45° gegeneinander verdreht sein oder drei Spulenpaare um jeweils 60°, wobei die Verdrehung um gleiche Winkel vorteilhaft, aber nicht zwingend ist. Durch die Verdrehung überlappen die Spulenpaare jeweils teilweise. Dies führt zu einer sektoriellen Empfindlichkeit der Empfängerspulenanordnung.

Bevorzugt ist eine kreisrunde Sendespule mit einem einzigen, insbesondere doppel-D-förmigen Spulenpaar, dessen Spulenpaar-Spiegelebene als neutrale Trennebene zwei Spulensektoren voneinander trennt. Die Wirbelstromsonde weist eine PseudoDipolcharakteristik mit den beschriebenen Vorteilen auf.

Es kann auch eine kreisrunde Sendespule mit zwei um 90° um die Spulenachse gegeneinander verdrehten Spulenpaaren, die insbesondere von der Sendespule umfaßt sind, vorgesehen sein. Durch die Anordnung wird eine "Orthogonalsonde" geschaffen, bei der die senkrecht aufeinander stehenden Spulenpaar-Spiegelebenen die Kreisfläche in vier Segmente einteilen. Die Spulenpaar-Spiegelebenen sind dabei Vorzugsebenen insofern, als ein Gegenstand, der symmetrisch zu einer Spulenpaar-Spiegelebene liegt, bzw. ein kleiner Gegenstand, der genau auf dieser Spiegelebene liegt, in dem entsprechenden Spulenpaar gerade kein Signal erzeugt. Ein Gegenstand kann damit in seiner Lage zum Spulenpaar in der Richtung senkrecht zur Spulenpaar-Spiegelebene lokalisiert werden, wobei über die Lage des Gegenstandes parallel zur Spiegelebene keine exakte Aussage gemacht werden kann. Die gleiche Lokalisiermöglichkeit besteht auch für das gegenüber dem ersten Spulenpaar verdrehte zweite Spulenpaar. Suchspulenanordnungen vom Typ der Orthogonalsonde eignen sich daher in besonderer Weise zur punktgenauen Lokalisierung von Suchobjekten. Auch können Spulenpaare so kombiniert werden, daß die Gesamtcharakteristik keine unempfindlichen Richtungen (bei einem Einzelspulenpaar entlang der Spulenpaar-Spiegelebene) aufweisen. Eine derartige Suchspule hat keinen "blinden Fleck" bzw. keine "blinde Linie".

Für die Zuordnung der Suchsignale zu einem bestimmten Ort im Suchbereich sind Lokalisierungsmittel vorgesehen. Die Lokalisierungsmittel können zur Ermittlung der Positionen der Suchsonde und/oder der ersten und/oder ggf. weiterer Sondenführungseinrichtungen vorgesehen sein. Sie können mit Vorteil mindestens ein satellitengestütztes Koordinatenbestimmungssystem, insbesondere ein Differential-GPS-System aufweisen. Mit Vorteil ist dieses zur Bestimmung der Position der ersten Sondenführungseinrichtung ausgebildet und angeordnet. Es ist auch möglich, die Position der ersten Sondenführungseinrichtung auf andere Weise, etwa optisch, insbesondere durch Lasertracking, ausgehend von Punkten bekannter Koordinaten auf der Erdoberfläche oder in anderer Weise durch Radar oder dergleichen zu bestimmen. Die Position der ersten Sondenführungseinrichtung kann auch durch Kombination eines Fahrstreckenzählers und eines Richtungsbestimmungsgerätes, etwa eines Kreisels oder eines Kompanden, ausgehend von einem Ort bekannter Koordinaten bestimmt werden. Wenn die Absolut-Koordinaten der Suchobjekte nicht oder nicht unmittelbar von Interesse sind, kann die Relativbestimmung der Suchobjekt-Koordinaten auch bezüglich eines im oder in der Nähe des Suchbereiches befindlichen, sicher wieder auffindbaren Punktes, der etwa durch eine Markierung sichtbar gemacht sein kann, erfolgen. Die Koordinaten dieses Punktes können ggf. bekannt sein oder in üblicher Weise durch Vermessung bestimmt werden.

Bei dem System kann mit Vorteil mindestens eine Wirbelstromsonde mit Pseudo-Dipol-Charakteristik signalübertragend mit der Signalauswerteeinheit für Magnetfeldsondensignale verbunden sein. Dies kann die oben beschriebene, eine Identifizierung der Suchobjekte erlaubenden Aufzeichnung erleichtern. Insbesondere kann eine für Magnetfeldsonden bewährte Auswerteeinheit auch für Wirbelstromsonden eingesetzt werden. Die Auswerteeinheit kann weiterhin mindestens eine mit den Lokalisierungsmitteln zusammenwirkende Umwandlungseinheit für Suchsignale in speicherbare Signale aufweisen, etwa einen Analog-Digital-Wandler. Die Umwandlung der Suchsignale in insbesondere digital speicherbare und weiterverarbeitbare Signale erlaubt die Anpassung des gesamten Signalaufnahmesystems an auf die speziellen Such- und Auswerteaufgaben hin optimierbare, an sich bekannte Rechenanlagen. Diese können mindestens ein Speichermedium, mindestens eine Rechnereinheit und vorzugsweise mindestens eine Ausgabeeinheit aufweisen. Die Ausgabeeinheit kann mindestens einen temporären und/oder permanenten flächigen Aufzeichnungsträger mit einer der Suchfläche entsprechenden Abbildungsfläche aufweisen. Dies kann beispielsweise eine durch einen Drucker herstellbare Objektkarte sein, die Aufzeichnung kann aber auch temporär auf einem Bildschirm erfolgen. Die Aufzeichnung über temporäre Aufzeichnungsträger kann insbesondere die Bearbeitung der Suchdaten über Computer erleichtern. Hier können an sich bekannte interaktive Systeme eingesetzt werden, mit Hilfe derer beispielsweise Teilbereiche des Suchbereiches gesondert angezeigt und analysiert werden können. Die Gegenstände können dabei vorzugsweise durch insbesondere farbige Gegenstandssymbole, wie etwa "8-förmige" Symbole, dargestellt sein, aus denen die Position des Gegenstandes im Suchbereich und ggf. deren Größe, Orientierung, Material bzw. Materialart und deren Tiefe im Suchbereich erkennbar sein kann.

Ein Ausführungsbeispiel der Erfindung ist in der Zeichnung dargestellt und wird im folgenden näher erläutert. Es zeigt:

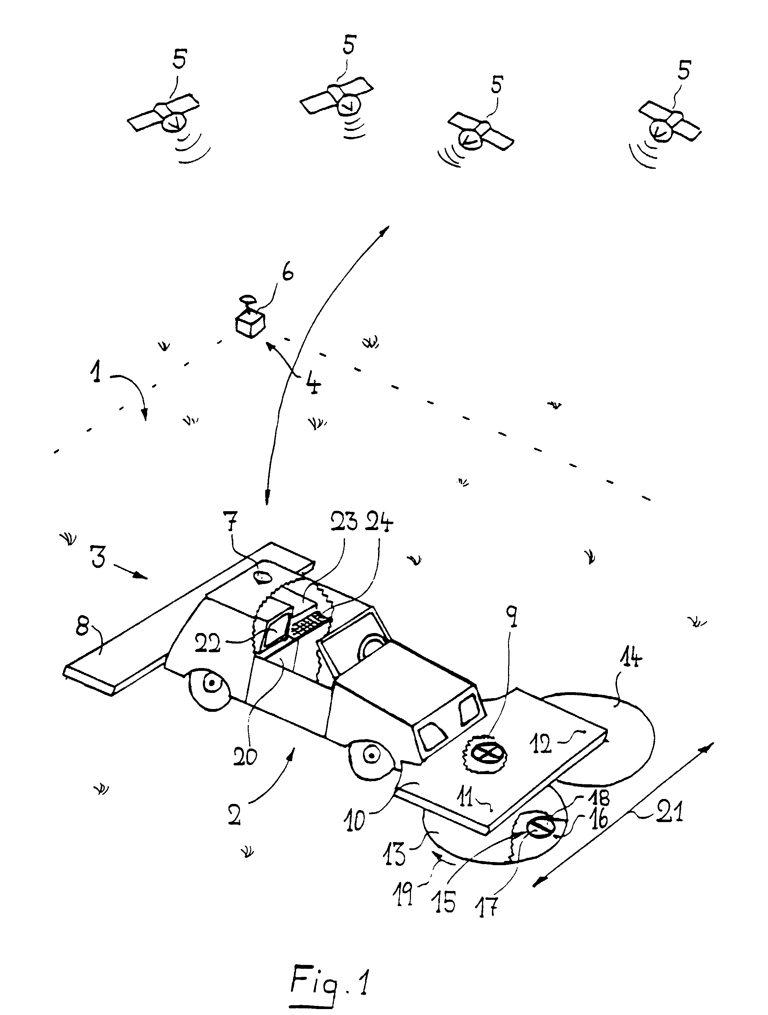

- Fig. 1: eine schematische Gesamtansicht eines erfindungsgemäßen Detektionssystems mit satellitengestützten Lokalisierungsmitteln.

Fig. 1 zeigt, durch gestrichelte Linien symbolisiert, einen Eckbereich eines rechtwinklig begrenzten Suchbereiches 1 auf der Erdoberfläche. In Suchbereich auf der Erdoberfläche wird eine als Landfahrzeug ausgebildete erste Sondenführungseinrichtung 2 entlang einer ersten Bewegungsrichtung 3 bewegt. Die Position des Fahrzeuges 2 im Suchbereich 1 wird durch ein Differential-GPS-System 4 bestimmt, das einen Teil der Lokalisierungsmittel des Detektionssystems darstellt. Die mit Satelliten 5 in Signalübertragungs-Kontakt stehenden GPS-Empfänger, nämlich der stationäre Empfänger 6 und der am Fahrzeug 2 angeordnete mobile Empfänger 7, erlauben eine exakte Positionsbestimmung des mobilen Empfängers 7 relativ zum stationären Empfänger 6 selbst dann, wenn die Absolut-Koordinaten der Empfänger 6, 7 systematisch neben den wahren Koordinaten liegen. Durch Vermessung des Ortes des stationären Empfängers 6 ließen sich gewünschtenfalls die Absolut-Koordinaten dieses Empfängers und der jeweiligen Position des mobilen Empfängers bestimmen.

Ausgehend von der Position des mobilen Empfängers 7 ist über die durch einen (nicht gezeigten) Kompaß bestimmbare Ausrichtung des Fahrzeuges die Position jedes starr am Fahrzeug 2 angeordneten Gegenstandes über seinen Abstand vom mobilen Empfänger 7 berechenbar. Dies gilt für die (nicht gezeigten) Magnetfeldsonden, die in einer Reihe nebeneinander im Querträger 8 angeordnet sind, genauso wie für die Orthogonalsonde 9, die im vorderen Trageelement 10 des Fahrzeuges 2 fest installiert ist. Gleichermaßen sind auch die Positionen der rechten Drehachse 11 und der linken Drehachse 12 festgelegt, um die als Rotierscheiben ausgebildete zweite Sondenführungseinrichtungen 13 und 14 drehbar gelagert sind. Im gezeigten Beispiel weist jede der Rotierscheiben 13, 14 eine Wirbelstromsonde auf, von der nur die rechte Wirbelstromsonde 15 gezeigt ist. Diese weist ein doppel-D-förming ausgebildetes Empfangsspulenpaar auf, das der Wirbelstromsonde 15 eine symmetrisch um die neutrale, parallel zu den Rücken der D und senkrecht zur Rotationsebene der Scheibe 13 verlaufende Trennebene verteilte sektoriell variierende Empfindlichkeit verleihen. Die D-förmigen Sondensektoren verleihen der Wirbelstromsonde 15 eine Pseudo-Dipol-Charakteristik, weil bei Bewegung der Sonde in Richtung senkrecht zur Trennebene 16 über ein Suchobjekt beispielsweise zuerst der vordere Sondensektor 17 ein Signal liefert, dieses Signal dann bei Überschreiten der Trennebene 16 über den Gegenstand minimal wird und das Signal ein vom ersten Maximum unterscheidbares zweites Maximum erreicht, wenn der hintere Sondensektor 18 über dem Suchobjekt ist. Auf diese Weise erzeugt ein Objekt ein Pseudo-Dipolsignal, wenn die Wirbelstromsonde 15 in Rotationsrichtung 19 der Rotierscheibe 13 über das Suchobjekt hinweggeführt wird. Die beschriebene Pseudo-Dipolwirkung ist selbstverständlich auch dann gegeben, wenn es sich im Vergleich zur Ausdehnung der Sondensektoren 17, 18 große Suchobjekte handelt, denn jeder (oberflächennahe) Ort des Suchobjektes kann als Quelle eines durch Wirbelströme induzierten Magnetfeldes angesehen werden. Signale eines Suchobjektes sind zu einem Gesamtsignal zusammenführbar.

Die Position der Wirbelstromsonde 15 relativ zur rechten Drehachse 11 ist durch den radialen Abstand zwischen Wirbelstromsonde 15 und der Drehachse 11 und die Drehstellung der Rotierscheibe 13 gegeben, wobei die Drehstellung durch (nicht gezeigte) Winkelgeber, die im Bereich der Drehachse 11 angeordnet sind, bestimmt wird. Die linke Rotierscheibe 14 ist identisch zu rechten Rotierscheibe 13 aufgebaut und dreht im gezeigten Beispiel synchron mit dieser. Dies erleichtert die Bestimmung der Positionen der beiden rotierenden Wirbelstromsonden, denn zwischen ihnen bleiben Abstand und Ausrichtung konstant.

Im Bereich der Drehachse 11, 12 sind (nicht gezeigt) berührungslos arbeitende transformatorische Ferritkern-Rotierübertrager angeordnet, die die Suchsignale der rotierenden Wirbelstromsonde an die Auswerteeinheit 20 weiterleiten. Rotierübertrager dienen auch der Versorgung der Sendespulen der rotierenden Wirbelsonden, die kreisrund sind und die Empfangsspulen-Doppel-D-Anordnung jeweils umfassen.

Die Orthogonalsonde 9 ist prinzipiell ähnlich aufgebaut wie die Wirbelstromsonde 15, sie weist jedoch zwei senkrecht zueinander verlaufende neutrale Trennebenen auf. Dadurch hat die Orthogonalsonde ein Vier-Sektoren-Verhalten, was eine punktgenaue Lokalisierung von Suchgegenständen erlaubt. Bei Fortbewegung des Fahrzeuges 2 in Richtung 3 analysiert die Orthogonalsonde 9 den zwischen den durch die rotierenden Sonden abtastbaren Bereich liegenden Zwischenbereich. Jede der Sonden für sich bewegt sich also auf einer Suchbahn, deren Breite vom Durchmesser der Wirbelstromsonde bestimmt ist. Alle Suchbahnen liegen in einer Insbesondere gemeinsamen Suchfläche, die im wesentlichen parallel zur Oberfläche des Suchbereiches 1 verläuft. Im gezeigten Beispiel wird bei Fortbewegung des Fahrzeugs 2 in Richtung 3 eine Gesamtbahn der Breite 21 lückenlos sowohl von den im vorderen Bereich des Fahrzeuges angeordneten Wirbelstronsonden, als auch den im hinteren Bereich des Fahrzeuges im Querträger 8 kammartig angeordneten Magnetfeldsonden, die durch die Wirbelstromsonden nicht beeinflußt werden, abgesucht.

Die Suchsignale der Suchsonden werden in der Auswerteeinheit 20 zusammengeführt, in digital verarbeitbare Daten umgewandelt und abgespeichert. Die gespeicherten Daten können durch die besonders an die Signale der Magnetfeldsonden abgestimmte Auswerte-Hard- und Software in gezeigten Beispiel noch im Fahrzeug 2 zu einer Abbildung der Suchobjekte im Suchbereich über den Bildschirm 22 und/oder den Drucker 23 ausgegeben werden. Manipulationen der Abbildung, beispielsweise die Wahl der Anzeigeart (beispielsweise: nur Eisenmetalle) kann auf der Basis der gespeicherten Daten über das Keyboard 24 oder über eine (nicht gezeigte) Maus erfolgen.

Bei einer anderen Ausführungsform weist das Fahrzeug alleine die zur Abspeicherung der Daten notwendigen Einheiten auf. Die Analyse der Suchfläche auf Basis der abgespeicherten Daten erfolgt zeitversetzt nach dem Suchvorgang. Bei einer anderen Ausführungsform werden die Suchsignale umgewandelt und per Datenfernübertragung kabellos einer beispielsweise am Rande der Suchfläche aufgestellten Auswerteeinheit zugeführt und können dort simultan zum Suchvorgang oder danach analysiert werden.

Durch die beschriebenen Ausführungsformen ist also ein fahrzeug- und GPS-gestütztes Wirbelstrom- und MagnetometerSuchsystem für die Oberflächennahe- und Tiefeortung metallischer Körper zur Altlastensanierung geschaffen.

Die Erfindung ist nicht auf die genannten Ausführungsformen beschränkt. Durch die Erfindung kann in zeitsparender, reproduzierbarer Weise eine große Vielfalt von Informationen über Suchobjekte in einem lateral ausgedehnten Suchbereich gewonnen werden. Kosten- und Zeitersparnis gehen einher mit bisher so nicht bekannten Möglichkeiten der Suchobjekt-Detektion und Identifikation. Der dadurch mögliche effiziente Einsatz von Räumungsmitteln ist ein weiterer positiver Aspekt der durch die Erfindung indirekt erreichbar ist.

## Patentansprüche

1. Verfahren zur Detektion elektrisch leitender Gegenstände in einem flächig ausgedehnten Suchbereich (1), bei dem mindestens eine Suchsignale erzeugende Suchsonde (9, 15) relativ zum Suchbereich (1) entlang einer in einer Suchfläche liegenden Suchbahn geführt wird, wobei die Suchsignale durch mindestens eine mit der Suchsonde signalübertragend verbundene Auswerteeinheit (20) automatisch den durch Lokalisierungsmittel (4 bis 7) festlegbaren Positionen der Suchsonde (9, 15) auf der Suchfläche zugeordnet werden und zu mind estens einer Abbildung der Gegenstände im Suchbereich umgewandelt werden, **dadurch gekennzeichnet,** daß die Suchsonde (15) entlang einer Suchbahn geführt wird, die sich aus einer Überlagerung einer linearen ersten Bewegung und einer vollständig kreisförmigen zweiten Bewegung ergibt.

2. Verfahren nach Anspruch 1, dadurch gekennzeichnet, daß die erste Bewegung zumindest abschnittsweise geradlinig verläuft.

3. Verfahren nach Anspruch 1 oder 2, **dadurch gekennzeichnet,** daß die erste Bewegung mäanderförmig mit geraden Abschnitten verläuft.

4. Verfahren nach einem der Ansprüche 1 bis 3, **dadurch gekennzeichnet**, daß die Suchfläche weitestgehend eben ist und von der Suchsonde (9, 15) in einem flächig zusammenhängenden Bereich lückenlos abgefahren wird, wobei Suchbahnabschnitte zumindest abschnittsweise aneinander angrenzen und/oder einander zumindest teilweise überschneiden.

5. Verfahren nach einem der vorhergehenden Ansprüche, **dadurch gekennzeichnet**, daß die Suchsonde (9, 15) eine mit zwei Frequenzen des Erregerfeldes betreibbare flächenhafte Wirbelstromsonde (15) mit über eine Sondenfläche sektoriell variierender Signalauswertung ist.

6. Verfahren nach einem der vorhergehenden Ansprüche 1 bis 4, **dadurch gekennzeichnet**, daß die Suchsonde eine Magnetfeldsonde ist, durch die durch Einwirkung des Erdmagnetfeldes auf magnetisierbare Gegenstände verursachte Veränderungen des Erdmagnetfeldes detektierbar sind.

7. Verfahren nach einem der vorhergehenden Ansprüche, **dadurch gekennzeichnet**, daß mindestens eine Wirbelstromsonde (9, 15) und mindestens eine Magnetfeldsonde gleichzeitig entlang der Suchfläche geführt werden, wobei die Suchsignale der Wirbelstromsonde (9, 15) und der Magnetfeldsonde zu einer gemeinsamen Abbildung kombinierbar sind.

8. Verfahren nach einem der vorhergehenden Ansprüche, **dadurch gekennzeichnet**, daß die Lokalisierungsmittel (4 bis 7) optisch und/oder mechanisch und/oder elektromechanisch und/oder elektromagnetisch und/oder satellitengestützt arbeiten.

9. Verfahren nach einem der vorhergehenden Ansprüche, **dadurch gekennzeichnet**, daß die Abbildung der Gegenstände auf einem temporären und/oder permanenten flächigen Aufzeichnungsträger erfolgt, der eine der Suchfläche entsprechende Abbildungsfläche aufweist, wobei ein Gegenstand durch ein farbiges Gegenstandssymbol dargestellt wird, aus dem die Position des Gegenstandes im Suchbereich und dessen Größe, Orientierung, Material bzw. Materialart, Tiefe erkennbar ist.

10. System zur Detektion elektrisch leitender Gegenstände in einem flächig ausgedehnten Suchbereich (1),
- mit mindestens einer Suchsignale erzeugenden, relativ zum Suchbereich, entlang einer in einer Suchfläche liegenden Suchbahn führbaren Suchsonde (9, 15),
- mindestens einem Sondenführungsmittel (2, 8, 10, 13, 14), an dem die Suchsonde (9,15) angeordnet ist
- mit Lokalisierungsmitteln (4,6,7) zur Festlegung der Position der Suchsonde (9, 15) in der Suchfläche
- mit mindestens einer mit der Suchsonde (9, 15) signalübertragend verbundenen Auswerteeinheit (20) und
- mit Abbildungsmitteln (22, 23) zur Erzeugung mindestens einer Abbildung der Gegenstände im Suchbereich,
**dadurch gekennzeichnet**, daß die Sondenführungsmittel (2, 8, 10, 13, 14) mindestens eine im wesentlichen parallel zur Suchfläche in einer ersten Bewegungsrichtung bewegbare erste Sondenführungseinrichtung (2), und an der ersten Sondenführungseinrichtung (2) angeordnet mindestens eine zweite Sonde nführungseinrichtung (13, 14) aufweisen, die um eine im wesentlichen senkrecht zur Suchfläche ausgerichtete Drehachse (11, 12) vollständig drehbar ist und die mindestens eine Suchsonde (15) aufweist.

11. System nach Anspruch 10, **dadurch gekennzeichnet**, daß die erste Sondenführungseinrichtung steuerbar ist, wobei die erste Sondenführungseinrichtung ein fernsteuerbares Fahrzeug (2) ist.

12. System nach Anspruch 11, **dadurch gekennzeichnet**, daß zwischen der Suchsonde (15) und der Auswerteeinheit Rotierübertrager für Wechselspannung angeordnet sind.

13. System nach einem der Ansprüche 11 oder 12, **dadurch gekennzeichnet**, daß die Suchsonde eine flächenhafte Wirbelstromsonde (9, 15) mit über eine Sondenfläche sektoriell variierender Signalauswertung ist, wobei die Suchsonde mindestens zwei symmetrisch zueinander angeordnete Sondensektoren (17, 18) aufweist.

14. System nach Anspruch 13, **dadurch gekennzeichnet**, daß die Wirbelstromsonde mindestens eine Sendespule zur Erzeugung eines veränderlichen Magnetfeldes und mindestens eine im Bereich des Manetfeldes angeordnete, eine Vielzahl von Windungen aufweisende Empfängerspulenanordnung aufweist, wobei die Windungen mindestens ein Spulenpaar bilden, das eine Vielzahl hintereinandergeschalteter Paare von in Differenz zueinander geschalteten und bezüglich der durch das Magnetfeld der Sendespule in ihnen induzierten Spannungen gleichen einzelnen Leiterschleifen aufweist.

15. System nach Anspruch 14, **dadurch gekennzeichnet**, daß die einzelnen Leiterschleifen eines Paares im wesentlichen gleiche Flächen umfassen und spiegelsymmetrisch zu einer die Flächen trennenden, mit einer Spiegelebene des Magnetfeldes zusammenfallenden Spulenpaar-Spiegelebene (16) angeordnet sind, wobei das Spulenpaar eine zu der Spulenpaar-Spiegelebene symmetrische Form aufweist, und die Form eines Doppel-D mit der Spulenpaar-Spiegelebene parallel zu den Rücken der D aufweist.

16. System nach einem der Ansprüche 14 oder 15, **dadurch gekennzeichnet**, daß die Sendespule als flache, mit Draht gewickelte Spule ausgebildet ist, wobei der Draht für starken Strom geeignet ist.

17. System nach einem der Ansprüche 13 bis 16, **dadurch gekennzeichnet**, daß die Wirbelstromsonde eine Sendespule und mehrere Spulenpaare aufweist, die gegeneinander versetzt und/oder verdreht mit den Spulenpaar-Spiegelebenen in Spiegelebenen des Magnetfeldes der Sendespule angeordnet sind, wobei eine kreisrunde Sendespule und zwei um 90° um die zentrale Sendespulenachse gegeneinander verdrehte Spulenpaare vorgesehen sind, die von der Sendespule umfaßt sind.

18. System nach einem der Ansprüche 10 bis 12, **dadurch gekennzeichnet**, daß die Suchsonde eine Magnetfeldsonde ist, durch die durch Einwirkung des Erdmagnetfeldes auf magnetisierbare Gegenstände verursachte Veränderungen des Erdmagnetfeldes detektierbar sind.

19. System nach einem der Ansprüche 10 bis 18, **dadurch gekennzeichnet**, daß mindestens eine Wirbelstromsonde (9, 15) und mindestens eine Magnetfeldsonde vorhanden sind, die gleichzeitig entlang der Suchfläche geführt werden können, wobei die Suchsignale der Wirbelstromsonde (9, 15) und der Magnetfel dsonde zu einer gemeinsamen Abbildung kombinierbar sind.

20. System nach einem der Ansprüche 10 bis 19, **dadurch gekennzeichnet**, daß die Lokalisierungsmittel (4,6,7) zur Ermittlung der Position der Suchsonde und/oder der ersten Sondenführungseinrichtung mindestens ein satellitengestütztes Koordinatenbestimmungssystem, und zwar ein Differential-GPS-System (4,6,7) aufweisen.

21. System nach einem der Ansprüche 18 bis 20, **dadurch gekennzeichnet**, daß die Auswerteeinheit (20) mindestens eine an sich bekannte Signalauswerteeinheit für Magnetfeldsondensignale aufweist, mit der die durch die Magnetfeldsonde meßbaren, durch magnetisierbare Gegenstände bewirkten dipolartigen Verzerrungen des Erdmagnetfeldes zur Information über Form und Lage des magnetisierten Gegenstandes auswertbar sind.

22. System nach einem der Ansprüche 13 bis 21, **dadurch gekennzeichnet**, daß mindestens eine Wirbelstromsonde (15) signalübertragend mit der Signalauswerteeinheit für Magnetfeldsondensignale verbunden ist.

23. System nach einem der Ansprüche 10 bis 22, **dadurch gekennzeichnet**, daß die Auswerteeinheit mindestens eine mit den Lokalisierungsmitteln zusammenwirkende Umwandlungseinheit für Suchsignale in speicherbare Signale, mindestens ein Speichermedium, mindestens eine Rechenereinheit und mindestens eine Ausgabeeinheit (22, 23) aufweist.

24. System nach Anspruch 23, **dadurch gekennzeichnet**, daß die Ausgabeeinheit (22, 23) mindestens einen temporären und/oder permanenten flächigen Aufzeichnungsträger mit einer der Suchfläche entsprechenden Abbildungsfläche aufweist, wobei ein Gegenstand durch ein farbiges Gegenstandssymbol darstellbar ist, aus dem die Position des Gegenstandes im Suchbereich und dessen Größe, Orientierung, Material bzw Materialart, Tiefe erkennbar ist.

## Revendications

1. Procédé de détection d'objets à conductibilité électrique dans une zone de détection (1) à extension en surface où au moins une sonde de détection (9, 15) générant un signal de détection est guidée par rapport à la zone de détection (1) le long d'une bande de détection se trouvant dans une surface de détection, les signaux de détection étant associés, par au moins une unité d'analyse reliée de façon à transmettre le signal à la sonde de détection (20), automatiquement aux positions pouvant être fixées par les moyens de localisation (4 à 7) de la sonde de détection (9, 15) sur la surface de détection et sont transformés au moins en une illustration des objets dans la zone de détection **caractérisé en ce que** la sonde de détection (15) est guidée le long d'une bande de détection qui résulte d'un chevauchement d'un premier mouvement linéaire et d'un deuxième mouvement entièrement circulaire.

2. Procédé selon la revendication 1, **caractérisé en ce que** le premier mouvement s'effectue en ligne droite au moins par section.

3. Procédé selon la revendication 1 ou 2, **caractérisé en ce que** le premier mouvement s'effectue en sections droites en forme de méandres.

4. Procédé selon l'une des revendications 1 à 3, **caractérisé en ce que** la surface de détection est dans sa plus grande partie plane et qu'elle est parcourue par la sonde de détection (9, 15) en une zone à surface reliée sans interruption, les sections de bande de détection se touchant l'une et l'autre au moins par section et/ou se chevauchant partiellement l'une sur l'autre.

5. Procédé selon l'une des revendications précédentes, **caractérisé en ce que** la sonde de détection (9, 15) est une sonde à courant de Foucaut (15) en surface pouvant être activée par deux fréquences du champ d'excitation avec analyse de signaux variant par secteur par l'intermédiaire d'une surface de sonde.

6. Procédé selon l'une des revendications précédentes 1 à 4, **caractérisé en ce que** la sonde de détection est une sonde de champ magnétique par laquelle les modifications du champ magnétique de la terre occasionnées par l'action du champ magnétique de la terre sur les objets magnétisables sont détectables.

7. Procédé selon l'une des revendications précédentes **caractérisé en ce qu'**au moins une sonde à courant de Foucault (9, 15) et au moins une sonde de champ magnétique sont guidées en même temps le long de la surface de détection, les signaux de détection de la sonde à courant de Foucault (9, 15) et de la sonde de champ magnétique sont combinables en une illustration commune.

8. Procédé selon l'une des revendications précédentes, **caractérisé en ce que** les moyens de localisation (4 à 7) fonctionnent optiquement et/ou mécaniquement et/ou électromécaniquement et/ou électromagnétiquement et/ou soutenues par satellite.

9. Procédé selon l'une des revendications précédentes, **caractérisé en ce que** l'illustration des objets s'effectue sur un support d'enregistrement plat temporaire et/ou permanent présentant une surface d'illustration correspondant à la surface de détection, un objet étant représenté par un symbole couleur d'objet à partir duquel la position de l'objet dans la zone de détection et ses dimensions, son orientation, sa matière voire son type de matière, sa profondeur sont reconnaissables.

10. Système de détection d'objets à conductibilité électrique, dans une zone de détection (1) à extension en surface
- avec au moins une sonde de détection (9, 15) générant un signal de détection pouvant être guidée par rapport à la zone de détection le long d'une bande de détection se trouvant dans une surface de détection,
- avec au moins un moyen de guidage de sonde (2, 8, 10, 13, 14) auquel la sonde de détection (9, 15) est placée
- avec des moyens de localisation (4, 6, 7) pour déterminer la position de la sonde de détection (9, 15) dans la surface de détection
- avec au moins une unité d'analyse (20) reliée de façon à transmettre le signal à la sonde de détection (9, 15) et
- avec des moyens d'illustration (22, 23) pour générer au moins une illustration des objets dans la zone de détection,
**caractérisé en ce que** les moyens de guidage de sonde (2, 8, 10, 13, 14) présentent au moins un premier dispositif de guidage de sonde (2) mobile essentiellement parallèle à la surface de détection dans une première direction de mouvement et, placée au premier dispositif de guidage de sonde (2), au moins un deuxième dispositif de guidage de sonde (13, 14) pivotable entièrement autour d'un axe rotatif (11,12) dirigé essentiellement de façon verticale par rapport à la surface de détection et présentant au moins une sonde de détection (15).

11. Système selon la revendication 10, **caractérisé en ce que** le premier dispositif de sonde peut être piloté, le premier dispositif de guidage de sonde étant un véhicule (2) à télécommande.

12. Système selon la revendication 11, **caractérisé en ce que** entre la sonde de détection(15) et l'unité d'analyse sont placés des transformateurs rotatifs pour tension alternative.

13. Système selon l'une des revendications 11 ou 12 **caractérisé en ce que** la sonde de détection est une sonde à courant de Foucault (9, 15) en surface avec analyse de signaux variant par secteur par l'intermédiaire d'une surface de sonde, la sonde de détection présentant au moins deux secteurs de sonde (17, 18) placés symétriquement l'un par rapport à l'autre.

14. Système selon la revendication 13 **caractérisé en ce que** la sonde à courant de Foucault présente au moins une bobine émettrice pour générer un champ magnétique modifiable et au moins un emplacement de bobine réceptrice, présentant une quantité d'enroulements, placée dans la zone du champ magnétique, les torsions formant au moins une paire de bobines qui présente une grande quantité de paires commutées les unes derrière les autres de boucles conductrices semblables individuelles commutées en différence l'une par rapport à l'autre et en référence aux tensions induites en elles par le champ magnétique de la bobine émettrice.

15. Système selon la revendication 14, **caractérisé en ce que** les boucles conductrices individuelles d'une paire comprennent essentiellement les mêmes surfaces et sont placées symétriquement par rapport à un niveau réfléchissant de paire de bobines (16) séparant les surfaces, coïncidant avec un niveau réfléchissant du champ magnétique, la paire de bobines présentant une forme symétrique par rapport au niveau réfléchissant de paire de bobines et présentant la forme d'un double D avec le niveau réfléchissant de paire de bobines, parallèlement au dos du D.

16. Système selon l'une des revendications 14 ou 15, **caractérisé en ce que** la bobine émettrice est formée en tant que bobine plate enroulée de fil, le fil étant adapté pour le courant de haute intensité.

17. Système selon les revendications 13 à 16 **caractérisé en ce que** la sonde à courant de Foucault présente une bobine émettrice et plusieurs paires de bobines qui sont placées de façon décalée l'une contre l'autre et/ou tournée avec les niveaux réfléchissant de paire de bobines aux niveaux réfléchissants du champ magnétique de la bobine émettrice, une bobine émettrice circulaire et deux paires de bobines, qui sont inclues par la bobine émettrice, tournées l'une contre l'autre de 90° autour de l'axe central de la bobine émettrice étant prévues.

18. Système selon les revendications 10 à 12, **caractérisé en ce que** la sonde de détection est une sonde de champ magnétique permettant de détecter les modifications du champ magnétique de la terre causées par l'action du champ magnétique de la terre sur les objets magnétisables.

19. Système selon les revendications 10 à 18, **caractérisé en ce qu**'il existe au moins une sonde à courant de Foucault (9, 15) et au moins une sonde de champ magnétique pouvant être guidées en même temps le long de la surface de détection, les signaux de détection de la sonde à courant de Foucault (9, 15) et de la sonde de champ magnétique peuvent être combinées en une illustration commune.

20. Système selon les revendications 10 à 19, **caractérisé en ce que** les moyens de localisation (4, 6. 7) présentent au moins un système de détermination de coordonnées assisté par satellite et ce un système différentiel GPS (4, 6, 7) pour déterminer la position de la sonde de détection et/ou du premier dispositif de guidage de sonde.

21. Système selon les revendications 18 à 20, **caractérisé en ce que** l'unité d'analyse (20) présente au moins une unité d'analyse de signaux connue en soi pour les signaux de la sonde de champ magnétique avec laquelle les distorsions dipolaires mesurables par la sonde de champ magnétique, provoquées par les objets magnétisables donnant des informations sur la forme et la position de l'objet magnétisable peuvent être analysées.

22. Système selon les revendications 13 à 21, **caractérisé en ce qu**'au moins une sonde à courant de Foucault (15) est reliée à l'unité d'analyse de signaux pour signaux de champ magnétique, de façon à transmettre un signal.

23. Système selon les revendications 10 à 22, **caractérisé en ce que** l'unité d'analyse présente au moins une unité de transformation de signaux de détection en signaux mémorisables, agissant ensemble avec les moyens de localisation, pour, au moins un agent de mémorisation, au moins une unité de calcul et au moins une unité de sortie (22, 23).

24. Système selon la revendication 23, **caractérisé en ce que** l'unité de sortie (22. 23) présente au moins un support d'enregistrement plat temporaire et/ou permanent avec une surface d'illustration correspondant à l'une des surfaces de détection, un objet étant représenté par un symbole objet en couleur à partir duquel la position de l'objet dans la zone de détection et ses dimensions, son orientation, sa matière voire son type de matière, sa profondeur sont reconnaissables.

## Claims

1. Method for detecting electrically conducting objects in a flatly extending search area (1), in which at least one search signal-generating search probe (9, 15) is guided relative to the search area (1) along a search path located in a search surface, the search signals being automatically associated by at least one evaluating unit (20) connected in signal-transmitting manner to the search probe with the positions of the search probe (9, 15) on the search surface determinable by localizing means (4 to 7) and are converted into at least one image of the objects in the search area, characterized in that the search probe (15) is guided along a search path, which results from a superimposing of a linear, first movement and a completely circular, second movement.

2. Method according to claim 1, characterized in that the first movement is at least zonally straight.

3. Method according to claim 1 or 2, characterized in that the first movement is meander-shaped with straight segments.

4. Method according to one of the claims 1 to 3, characterized in that the search surface is substantially planar and is uninterruptedly covered by the search probe (9, 15) in a flat continuous area, in which search path segments are at least zonally adjacent to one another and/or at least partly overlap.

5. Method according to one of the preceding claims, characterized in that the search probe (9, 15) is a plane eddy current probe (15) operable with two frequencies of the exciting field with sectorally varying signal evaluation over a probe surface.

6. Method according to one of the preceding claims 1 to 4, characterized in that the search probe is a magnetic field probe making it possible to detect variations to the earth's magnetic field caused by the action of said earth's magnetic field on the magnetizable objects.

7. Method according to one of the preceding claims, characterized in that at least one eddy current probe (9, 15) and at least one magnetic field probe are simultaneously guided along the search surface, the search signals of the eddy current probe (9, 15) and the magnetic field probe being combinable for a common imaging.

8. Method according to one of the preceding claims, characterized in that the localizing means (4 to 7) operate optically and/or mechanically and/or electromechanically and/or electromagnetically and/or in satellite-assisted manner.

9. Method according to one of the preceding claims, characterized in that the imaging of the objects takes place on a temporary and/or permanent flat record carrier, which has an imaging surface corresponding to the search surface, an object being represented by a coloured object symbol from which it is possible to recognize the position of the object in the search area and its size, orientation, material or material type and depth.

10. System for detecting electrically conducting objects in a flatly extending search area (1),
- having at least one search probe (9, 15) generating search signals and guidable relative to the search area along a search path located in a search surface,
- at least one probe guidance means (2, 8, 10, 13, 14) on which the search probe (9, 15) is located,
- having localizing means (4, 6, 7) for fixing the position of the search probe (9, 15) in the search surface,
- with at least one evaluating unit (20) connected in signal-transmitting manner to the search probe (9, 15) and
- with imaging means (22, 23) for producing at least one image of the objects in the search area,
characterized in that the probe guidance means (2, 8, 10, 13, 14) have at least one first probe guidance device (2) movable substantially parallel to the search surface in a first movement direction and on said first probe guidance device (2) at least one second probe guidance device (13, 14), which is completely rotatable about a rotation axis (11, 12) oriented substantially perpendicular to the search surface and having at least one search probe (15).

11. System according to claim 10, characterized in that the first probe guidance device is controllable, said first probe guidance device being a remotely controllable vehicle (2).

12. System according to claim 11, characterized in that rotary transmitters for a.c. voltage are located between the search probe (15) and the evaluating unit.

13. System according to one of the claims 11 or 12, characterized in that the search probe is a plane eddy current probe (9, 15) with signal evaluation sectorally varying over a probe surface, the search probe having at least two symmetrically arranged probe sectors (17, 18).

14. System according to claim 13, characterized in that the eddy current probe has at least one transmitting coil for generating a variable magnetic field and at least one receiving coil means having a plurality of turns and located in the vicinity of the magnetic field, the turns forming at least one coil pair, which has a plurality of series-connected pairs of differentially connected, individual conductor loops, identical with respect to the voltages induced in them by the transmitting coil magnetic field.

15. System according to claim 14, characterized in that the individual conductor loops of a pair take up substantially identical surface areas and are arranged in mirror symmetrical manner to a coil pair mirror plane (16) separating the surfaces and coinciding with a mirror plane of the magnetic field, the coil pair having a shape symmetrical to the coil pair mirror plane and the shape of a double D with the coil pair mirror plane parallel to the back of the D.

16. System according to one of the claims 14 or 15, characterized in that the transmitting coil is constructed as a flat, wire-wound coil, the wire having a high current carrying capacity.

17. System according to one of the claims 13 to 16, characterized in that the eddy current probe has a transmitting coil and several coil pairs, which are mutually displaced and/or are arranged turned with the coil pair mirror planes in mirror planes of the magnetic field of the transmitting coil, there being a circular transmitting coil and two coil pairs mutually turned by 90° about the central transmitting coil axis and are surrounded by the transmitting coil.

18. System according to one of the claims 10 to 12, characterized in that the search probe is a magnetic field probe making it possible to detect changes to the earth's magnetic field caused by the action of the earth's magnetic field on magnetizable objects.

19. System according to one of the claims 10 to 18, characterized in that there are at least one eddy current probe (9, 15) and at least one magnetic field probe, which can be simultaneously guided along the search surface, the search signals of the eddy current probe (9, 15) and the magnetic field probe being combinable for a common imaging.

20. System according to one of the claims 10 to 19, characterized in that the localizing means (4, 6, 7) for determining the position of the search probe and/or the first probe guidance device have at least one satellite-assisted coordinate determination system, namely a differential GPS system (4, 6, 7).

21. System according to one of the claims 18 to 20, characterized in that the evaluating unit (20) has at least one per se known signal evaluating unit for magnetic field probe signals, with which dipole-like distortions of the earth's magnetic field brought about by magnetizable objects and measurable by the magnetic field probe are evaluatable for providing information on the shape and position of the magnetized object.

22. System according to one of the claims 13 to 21, characterized in that at least one eddy current probe (15) is connected in signal-transmitting manner to the signal evaluating unit for magnetic field probe signals.

23. System according to one of the claims 10 to 22, characterized in that the evaluating unit has at least one conversion unit, cooperating with the localizing means, for converting search signals into storable signals, at least one storage medium, at least one computer unit and at least one output unit (22, 23).

24. System according to claim 23, characterized in that the output unit (22, 23) has at least one temporary and/or permanent flat record carrier with an imaging surface corresponding to the search surface, an object being representable by a coloured object signal, from which it is possible to determine the position of the object in the search area and its size, orientation, material or material type and depth.
